Europäisches Patentamt

European Patent Office

Office européen des brevets

(19)

(11) EP 0 931 777 A2

(12) **EUROPÄISCHE PATENTANMELDUNG**

(43) Veröffentlichungstag:
28.07.1999 Patentblatt 1999/30

(51) Int Cl.⁶: **C04B 28/06**, E04F 15/12
// (C04B28/06, 7:02, 14:42, 16:06, 16:08, 22:14, 24:06, 24:26), C04B111:60

(21) Anmeldenummer: 99101217.0

(22) Anmeldetag: 22.01.1999

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 23.01.1998 DE 19802602
04.06.1998 DE 19825058

(71) Anmelder: Wulff GmbH U. Co.
49504 Lotte (DE)

(72) Erfinder:
• Dieckmann, Ernst
49088 Osnabrück (DE)
• Hummelt, Ralf
48325 Osnabrück (DE)
• Schliffke, Horst-Friedrich
48565 Steinfurt-Burgsteinfurt (DE)

(74) Vertreter: König, Beate, Dipl.-Phys. Dr. et al
Patentanwälte König & Köster,
Morassistrasse 8
80469 München (DE)

(54) **Verfahren zum Verlegen von Belägen auf Untergründe**

(57) Die Erfindung betrifft ein Verfahren zum Verlegen von Belägen auf Untergründe unter Verwendung eines Schnell-Dünnestrichs, wobei man eine Spachtelmasse der Quellzement-Type K mit 2,3,4,5-Tetrahydroxyadipinsäure vermischt und entweder latexierte vermahlene Hartfasern in Kombination mit Glas- und bzw. oder Polymerisatfasern sowie ferner Aminosäure-polykondensations-Fasern und Polyurethan-Schaum zumischt, das Ganze mit einer Dispersion eines carboxylhaltigen Butadien/Styrol-Copolymerisats das Gemisch mit Wasser anmacht, auf den Untergrund aufbringt und trocknen läßt und anschließend eine wässrige Kunstharz-Dispersion mit einem Wassergehalt von nicht mehr als 15 % aufbringt und danach den Belag darauf verlegt oder die mit der 2,3,4,5-Tetrahydroxyadipinsäure versetzte Spachtelmasse mit Wasser anmacht, das Gemisch auf den Untergrund aufbringt und eine mechanische, klebstofffreie Verbindung zwischen Belag und Untergrund durch Anordnen eines aus dem Untergrund herausragenden Gemisches aus a) latexierten vermahlenen Hartfasern, b) 0 bis 100%, bezogen auf das Gewicht der Hartfasern, an Glasfasern und bzw. oder Polymerisatfasern, c) Aminosäurepolykondensationsfasern und d) Polyurethanschaum herbeiführt.

EP 0 931 777 A2

Printed by Jouve, 75001 PARIS (FR)

**Beschreibung**

Die Erfindung betrifft ein Verfahren zum Verlegen von Belägen auf Untergründe.

Bis in die 40er Jahre des 20. Jahrhunderts wurden Häuser konventionell mit schweren Vollsteinen und schweren Holzbalkendecken gebaut. Ihre großen Gewichte und diese Bauart der Wohnungstrennwände und Wohnungstrenndecken gewährleisten eine ausreichende Schalldämmung. Diese "schwere" Bauart wurde Ende der 40er Jahre durch leichtere Baustoffe und Massivdecken (Betondecken) abgelöst. Die Anforderungen an den Trittschallschutz werden durch diese Baustoffe nach DIN 4109 bei weitem nicht erreicht. Daher stellt bei normalem Massivbau die Verwendung eines schwimmenden Estrichs (z.B. mindestens 45 mm Zementestrich auf genormter, weich federnder Dämmunterlage zwischen Betondecke und Estrichplatte gemäß DIN 18 164, Teil 2: Schaumkunststoffe - Dämmstoffe für die Trittschalldämmung und DIN 18 165, Teil 1: Faserdämmstoffe - Dämmstoffe für die Trittschalldämmung) die Regel der Technik dar.

Durch dieses zweischalige System wird eine ausreichend hohe Schalldämmung erreicht. Die Basis der Dämmstoffe nach DIN 18 164 und DIN 18 165 stellen Polystyrol, Gummi, Mineralfasern o.ä. dar, wobei Körperschallkontakte zum Baukörper vor allem im Wandanschlußbereich verhindert werden müssen.

Das zu erwartende Trittschallschutzmaß TSM mit schwimmenden Estrichen setzt sich zusammen aus dem Schallschutzmaß der Rohdecke (äquivalentes Trittschallschutzmaß $TSM_{eq}$) und dem sich aus einem Verbesserungsmaßnahme ergebenden Trittschallverbesserungsmaß und wird nach folgender Gleichung bestimmt:

$$TSM = TSM_{eq} + VM - 2dB$$

Das Trittschallschutzmaß TSM errechnet sich nach der Gleichung:

$$TSM = 63\ dB - L_{n,w}$$

$L_{n,w}$ ist der äquivalente bewertete Norm-Trittschallpegel der Rohdecke.

Das Trittschallschutzmaß wird nach DIN EN 20140 (ältere DIN 52210) als Trittschallminderung akustisch gemessen. Der Schallpegel wird dabei in Dezibel (dB) gemessen.

Die bekannten Trittschallverbesserungsmaßnahmen sind:

* einschalige Holzbalkendecke mit Zwischenschüttung
* zweischalige Decken, d.h. zwischen Gehbelag und Holzbalken und unterseitiger Verkleidung Dämmschichten
* schwimmender Estrich mit Dämmstoffen möglichst geringer dynamischer Steifigkeit der Dämmstoffe
* schwimmend verlegte Holzfußböden mit TS-Dämmschicht
* federnde Auflagen
* Wände und Decke mit großem Quadratmetergewicht
* Geräuscharme Installationselemente/Isolierung zwischen Installation und Bauwerk konsequent druchgeführt
* Einzug einer Unterdecke mit Federbefestigung an Unterdecke

Schalldämmung wird verlangt gegen Trittschallübertragung bei:

* Kellerdecken (Waschküchen, Trockenböden)
* Wohnungstrenndecken
* Decken über/unter offenen Garagen, Durchfahrten
* Decken unter Dachräumen

Die Bewohner von Wohnungen sollen gegen die Übertragung von Schall aus anderen Wohnungen geschützt werden.

Deshalb soll es eine gute Schalldämmung den Bewohnern eines Hauses oder einer Wohnung ermöglichen, sich in ihren eigenen vier Wänden möglichst frei zu entfalten, ohne daß die Nachbarn ungewollt Zeuge jeder Lebensäußerung werden. Für eine Wohnungstrenndecke war bis Ende der 80er Jahre die Mindestanforderung für Trittschallschutz mit dem Trittschallschutzmaß TSM = 0 dB gefordert. Nach der DIN 4109 (Schallschutz im Hochbau), Ausgabe November 1989 und der VDI-Richtlinie 4100: Schallschutz von Wohnungen wird ein erhöhtes Trittschallschutzmaß TSM gefordert. Die Beziehung zwischen Geräuschpegel und bewertetem Norm-Trittschallpegel (und zugleich Trittschallschutzmaß) zeigt näherungsweise die nachfolgende Grafik:

In der DIN-Norm 4109, Ausgabe November 1989 werden erstmals Werte für den notwendigen Trittschallschutz von Treppen im Geschoßwohnungsbau vorgegeben. Hier werden Anforderungen für einen bewerteten Norm-Trittschallpegel von 58 dB (Trittschallschutzmaß von 5 dB) festgelegt. Langfristig sollten jedoch die für die Trittschallübertragung empfohlenen erhöhten bewerteten Norm-Trittschallpegel $L'_{n,w}$ (Trittschallschutzmaß TSM) angestrebt werden, wie aus der nachfolgenden Tabelle ersichtlich:

| Spalte | 1 | 2A | 2B | 3A | 3B |
|--------|---|-----|-----|-----|-----|
| | | Notwendiger Trittschallschutz | | | |
| | | verminderter Schutz | | anzustrebender Schutz | |
| Zeile | Schallschutzstufe | $L'_{n,w}$*) in dB | (TSM)*)in dB | $L'_{n,w}$*) in dB | (TSM)*) in dB |
| 1 | I | 58 | (5) | 53 | (10) |
| 2 | II | 53 | (10) | 46 | (17) |
| 3 | III | 46 | (17) | 39 | (24) |

*) Zwischen TSM und $L'_{n,w}$ besteht der Zusammenhang TSM = 63 dB - $L'_{n,w}$

Die Mindestanforderungen an das bewertete Bau-Schalldämm-Maß und das Trittschallschutzmaß für wichtige Bauteile von Wohnhäusern sind in der Tabelle 1.6, Spalte 3 und 4, DIN EN 20140 T3 wiedergegeben. In der DIN-Norm 4109 finden sich außerdem Mindestanforderungen für weitere Bauteile für einen erhöhten Schallschutz sowie Richtwerte für den Schallschutz im eigenen Wohn- und Arbeitsbereich. Weltweit stehen Millionen von Wohnungen älterer Baujahre zur Sanierung an. Es besteht auch ein enormer Sanierungsnachholbedarf. Im Zuge dieser Maßnahmen müssen auch die kontinuierlich gestiegenen Anforderungen an den Schallschutz berücksichtigt werden. Die Erzielung einer Trittschallschutzmaßnahme ist nur durch zusätzliche Maßnahmen auf den Rohbetondecken und/oder den Holzbalkenkonstruktionen möglich. Beim Nachweis des Trittschallschutzes von Deckenkonstruktionen dürfen nur der schwimmende Estrich und eventuell verlegte Unterlagen für Bodenbeläge in die Berechnung mit einbezogen werden, jedoch nicht weich federnde Bodenoberbeläge, da diese vom Nutzer jederzeit ausgetauscht werden können und deren Verbesserungsmaß infolge des eintretenden Verschleißes nicht konstant bleibt.

Gegenstand der DE 197 31 485 A1 ist ein Verfahren zum Verlegen von Belägen auf Untergründe, bei dem man für die Untergründe eine an sich (beispielsweise aus DE-OS 26 26 126) bekannte Spachtelmasse in Form einer Trockenmörtelmischung auf Basis von Portlandzement, Tonerdeschmelzzement und Calciumsulfat (Quellzement vom Typ K), die zur Bildung einer Ettringitphase geeignet ist, mit 2,3,4,5-Tetrahydroxyadipinsäure als Verflüssiger in einer Menge von 0,15 bis 1,0 Gewichtsprozent und einem Gemisch aus latexierten vermahlenen Hartfasern, Aminosäurepolykondensationsfasern und Polyurethanschaum in einer Menge von 10 bis 20 Gewichtsprozent, jeweils bezogen auf die Gesamttrockenmörtelmischung, vermischt und den so erhaltenen Trockenmörtel mit einer verseifungsbeständigen Dispersion eines carboxylgruppenhaltigen Butadien/Styrol-Copolymerisats mit äußerst geringen Emissionswerten in einer Menge von 4 bis 8 Gewichtsprozent, jeweils bezogen auf die Gesamttrockenmörtelmischung, elastifiziert, das erhaltene Gemisch mit Wasser anmacht, auf den Untergrund aufbringt und trocknen läßt und anschließend auf den so erhaltenen Schnell-Dünnschichtestrich mit verbessertem Trittschallschutzmaß (TSM) eine emissionsarme (max. 300 $\mu$g/m$^3$), lösungsmittelfreie Kunstharzdispersion mit einem Wassergehalt von nicht mehr als 15 Prozent, mit einem Gehalt an einem Klebrigmacher auf Basis natürlicher Harzester und bzw. oder von Kunstharzen und mit einem Gehalt an einem Emulgator auf Basis von sulfatierten und/oder sulfonierten Hydroxy-octadecensäuren und/oder deren hochmolekularen Triglyceriden von 1 bis 5 Gewichtsprozent, bezogen auf die Kunstharzdispersion, wobei der Klebrigmacher auf einen pH-Wert von 4 bis 6 eingestellt ist, aufbringt und danach den Belag darauf verlegt.

Es wurde nun gefunden, daß man anstelle eines Teils der latexierten, vermahlenen Hartfasern auch Glasfasern, Polymerisatfasern, wie Polyacrylnitril-, Polyamid-, Polyester- oder Polypropylenfasern, oder Gemische daraus als Faserkomponente des Trockenmörtels einsetzen kann.

Außerdem wurde gefunden, daß dadurch, daß die mit Wasser angemachte, auf den Untergrund aufgebrachte und der Trocknung überlassene Mörtelmischung in getrocknetem Zustand aufgerauht und auf diese Weise das Füllstoff/Faser-Gemisch von der Ummantelung durch den Zementmörtel befreit wird, eine rein mechanische Teppichfixierung erzielt werden kann, wenn auf den so behandelten Estrich der Teppichbelag aufgelegt und leicht angerieben wird. Die bisher als notwendig erachtete Verklebung von Estrich und Teppichbelag kann dann entfallen und der Belag nötigenfalls leichter entfernt werden.

Weiter wurde gefunden, daß die Fasern auch außerhalb des Estrichs eingesetzt werden können und sich auch dabei eine Verklebung erübrigt.

Aufgabe der Erfindung ist daher die Verwendbarkeit leichter zugänglicher Fasermaterialien sowie der Einsatz der Fasern zur Erzielung einer Haftung des Belages auf dem Untergrund ohne Verklebung, so daß er leicht entfernt werden kann.

Gegenstand der Erfindung ist ein Verfahren zum Verlegen von Belägen auf Untergründe, bei dem man für die Untergründe eine an sich bekannte Spachtelmasse in Form einer Trockenmörtelmischung auf Basis von Portlandzement, Tonerdeschmelzzement und Calciumsulfat (Quellzement vom Typ K), die zur Bildung einer Ettringphase geeignet ist, mit 0,15 bis 1,0 Gewichtsprozent 2,3,4,5-Tetrahydroxyadipinsäure als Verflüssiger und 10 bis 20 Gewichtsprozent, jeweils bezogen auf die Gesamttrockenmörtelmischung, eines Gemisches aus a) latexierten vermahlenen Hartfasern, b) Glasfasern und bzw. oder Polymerisatfasern, c) Aminosäurepolykondensationsfasern und d) Polyurethanschaum vermischt und den so erhaltenen Trockenmörtel mit einer verseifungsbeständigen Dispersion eines carboxylgruppenhaltigen Butadien/ Styrol-Copolymerisats mit äußerst geringen Emissionswerten (max. 300$\mu$g/m$^3$) in einer Menge von 4 bis 8 Gewichtsprozent, bezogen auf die Gesamttrockenmörtelmischung, elastifiziert, das erhaltene Gemisch mit Wasser anmacht, auf den Untergrund aufbringt und trocknen läßt und anschließend auf den so erhaltenen Schnell-Dünnschichtestrich mit bis 12 dB verbessertem Trittschallschutzmaß (TSM) eine emissionsarme (max. 300 $\mu$g/m$^3$), lösungsmittelfreie Kunstharzdispersion mit einem Wassergehalt von nicht mehr als 15 Prozent, mit einem Gehalt an einem Klebrigmacher auf Basis natürlicher Harzester und bzw. oder von Kunstharzen und mit einem Gehalt an einem Emulgator auf Basis von sulfatierten und/oder sulfonierten Hydroxy-octadecensäuren und/oder deren hochmolekularen Triglyceriden von 1 bis 5 Gewichtsprozent, bezogen auf die Kunstharzdispersion, wobei der Klebrigmacher auf einen pH-Wert von 4 bis 6 eingestellt ist, aufbringt und danach den Belag darauf verlegt.

Gegenstand der Erfindung ist ferner eine Abwandlung des Verfahrens zum Verlegen von Belägen auf Untergründe, bei dem man für die Untergründe eine an sich bekannte Spachtelmasse in Form einer Trockenmörtelmischung auf der Basis von Portlandzement, Tonerdeschmelzzement und Calciumsulfat (Quellzement vom Typ K), die zur Bildung einer Ettringitphase geeignet ist, mit 0,15 bis 1,0 Gewichtsprozent, bezogen auf die Gesamttrockenmörtelmischung, 2,3,4,5-Tetrahydroxyadipinsäure als Verflüssiger vermischt, anmacht und auf den Untergrund aufbringt und trocknen läßt und anschließend eine wässrige Kunstharz-Dispersion mit einem Wassergehalt von nicht mehr als 15 % aufbringt und danach den Belag darauf verlegt oder die mit der 2,3,4,5-Tetrahydroxyadipinsäure versetzte Spachtelmasse mit Wasser anmacht, das Gemisch auf den Untergrund aufbringt und eine mechanische, klebstofffreie Verbindung zwischen Belag und Untergrund durch Anordnen eines aus dem Untergrund herausragenden Gemisches aus a) latexierten vermahlenen Hartfasern, b) 0 bis 100%, bezogen auf das Gewicht der Hartfasern, an Glasfasern und bzw. oder Polymerisatfasern, c) Aminosäurepolykondensationsfasern und d) Polyurethanschaum herbeiführt.

Die Anordnung von aus dem Untergrund herausragenden Fasern kann auf unterschiedliche Weise verwirklicht werden.

Eine Lösung besteht darin, daß man die Verbindung zwischen Belag und Untergrund dadurch herbeiführt, daß man die mit dem Verflüssiger versetzte Trockenmörtelmischung mit 10 bis 20 Gewichtsprozent, bezogen auf die Gesamttrockenmörtelmischung, des Fasergemisches vermischt und den so erhaltenen Trockenmörtel mit einer verseifungsbeständigen Dispersion eines carboxylgruppenhaltigen Butadien/Styrol-Copolymerisats mit äußerst geringen Emissionswerten (max. 300 µg/m$^3$) in einer Menge von 4 bis 8 Gewichtsprozent, bezogen auf die Gesamttrockenmörtelmischung, elastifiziert, das erhaltene Gemisch mit Wasser anmacht, auf den Untergrund aufbringt und trocknen läßt und anschließend den so erhaltenen Schnell-Dünnschichtestrich aufrauht, die aufgerauhte Oberfläche von Staub befreit und danach den Belag darauf verlegt und leicht anreibt.

Eine weitere Lösung ist, daß man die Verbindung zwischen Belag und Untergrund dadurch herbeiführt, daß man die mit dem Verflüssiger versetzte Trockenmörtelmischung mit Wasser anmacht, auf den Untergrund aufbringt und trocknen läßt und anschließend auf den so erhaltenen Schnell-Dünnschichtestrich eine wäßrige, nicht ionogene, stabilisierte, emissionsarme, verseifungsbeständige Dispersion eines carboxylgruppenhaltigen Butadien/Styrol-Copolymerisats mit einem Gehalt an dem Fasergemisch von 10 bis 30 Gew.-%, bezogen auf die faserfreie Dispersion, in einer Schichtdicke von 0,5 bis 2 mmm aufbringt und trocknen läßt und auf die getrocknete Oberfläche den einen haftsicheren Vliesrücken aufweisenden Belag verlegt und leicht anreibt.

Bei einer weiteren Lösung führt man die Verbindung zwischen Belag und Untergrund dadurch herbei, daß man die mit dem Verflüssiger versetzte Trockenmörtelmischung mit Wasser anmacht, auf den Untergrund aufbringt und trocknen läßt und anschließend auf den so erhaltenen Schnell-Dünnschichtestrich eine wäßrige, nicht ionogene, stabilisierte, emissionsarme verseifungsbeständige Dispersion eines carboxylgruppenhaltigen Butadien/Styrol-Copolymerisats in einer Schichtdicke vom 0,5 bis 2 mm aufbringt und mindestens 24 Stunden trocknen läßt, in die noch fließfähige Dispersion das Fasergemisch in einer Menge von 600 bis 800 g/m$^2$, bezogen auf das Gewicht der für die jeweilige Fläche verwendeten faserfreien Dispersion, einstreut, die Dispersion trocknen läßt und die getrocknete Oberfläche von losen Fasern befreit (ca. 300 bis 400 g/m$^2$). Nach dem Einstreuen, Abtrocknen der Spachtelmasse wird eine emissionsarme Kunststoffdispersion mit carboxylhaltigem Butadien/Styrol-Copolymerisat aufgerollt oder mit einem geeigneten Gerät aufgesprüht. Der Anstrich dient der inneren Verfestigung des aufgetragenen Materials und gewährleistet DIN-gerechte Stuhlrolleneignung. Danach wird der einen haftsicheren Vliesrücken aufweisende Belag darauf verlegt und leicht angerieben.

Schließlich bewirkt man die Verbindung zwischen Belag und Untergrund bei einer weiteren Lösung dadurch, daß man die mit dem Verflüssiger versetzte Trockenmörtelmischung mit Wasser anmacht, auf den Untergrund aufbringt, noch vor dem Austrocknen nach dem Aufspachteln das Fasergemisch einstreut und nach dem Abtrocknen der Spachtelmasse und Entfernen des überschüssigen Faseranteils eine wäßrige, nicht ionogene, stabilisierte, emissionsarme, verseifungsbeständige Dispersion eines carboxylgruppenhaltigen Butadien/Styrol-Copolymerisats in einer Schichtdicke von 0,5 bis 2 mm aufbringt und die getrocknete Oberfläche von losen Fasern befreit und danach den einen haftsicheren Vliesrücken aufweisenden Belag darauf verlegt und leicht anreibt.

Gegenstand der Erfindung sind außerdem die bei den genannten Verfahren eingesetzte Spachtelmassen-Trockensubstanz (Trockenmörtel) sowie die eingesetzte Dispersion eines Butadien/Styrol-Copolymerisats mit Fasergehalt.

Als Polymerisatfasern werden bevorzugt Polyacrylnitril-, Polyamid-, Polyester- oder Polypropylenfasern oder Gemische daraus eingesetzt. Ihre Stapellänge beträgt 1 bis 6 mm. Wenn Polymerisat- und/oder Glasfasern zusätzlich zu den Hartfasern eingesetzt werden, beträgt ihr Anteil bis zu 100% des Gewichts der Hartfasern. Das Gewichtsverhältnis von Hartfasern, ggf. im Gemisch mit Glas- und/oder Polymerisatfasern, zu Aminopolykondensationsfasern und Polyurethanschaum kann in weiten Grenzen variieren.

Durch die Mitverwendung von Glas- und bzw. oder Polymerisatfasern wird die Rauhigkeit der Faserbestandteile erhöht, was die mechanische Haftung des Teppichbelags auf dem Untergrund (Verschiebefestigkeit) erhöht.

Durch die Behandlung der Füllstoff-Fasermischung mit synthetischem Latex und/oder hochelastischen, verseifungsresistenten, carboxylgruppenhaltigen Butadien/Styrol-Copolymerisaten und/oder Acrylsäuremischester-Polymerisaten (Latexierung) erhalten die Fasern mehr Sprungelastizität. Die Vermahlung des Hartfasergrundstoffes ist erforderlich, um die äußere Hülle dieser Fasern zu öffnen (wie bei der Flachsfaser zur Herstellung von Leinen) oder zu zerstören und so eine durchgehende, d.h. imprägnierende Faser-Latexierung der eigentlichen Faseranteile zu erreichen. Trotz der Vermahlung bleibt der Fasercharakter (Faserlänge: 1 bis 6 mm) erhalten. Beispiele für Hartfasern (DIN 60001/I) sind Hanf, Kapok, Kokos oder Sisal. Zusätzlich können die vermahlenen Hartfasern nach dem Latexieren verpreßt werden. Der Polyurethanschaum kann aus vermahlenen PU-Altschaumplatten, also aus Produktionsabfall stammen. Ein Vermahlen oder Latexieren der gegebenenfalls mitverwendeten Glas- oder Polymerisatfasern findet nicht statt.

Der erhaltene, gegebenenfalls mit Fasern und Füllstoff versehene mineralische Trockenmörtel gemäß der Erfindung wird vor der Verarbeitung gegebenenfalls mit 4 bis 8 Gewichtsprozent einer wäßrigen, verseifungsbeständigen, carboxylgruppenhaltigen Butadien/Styrol-Copolymerisat-Dispersion mit äußerst geringen Emissionswerten, d. h. mit Emissionswerten von max. 300 µg/m$^3$ am 10. Tag versetzt. Das erhaltene Gemisch bzw. der ursprünglich mineralische Trockenmörtel wird danach mit ca. 15 bis 20 % Wasser angemacht, auf den Untergrund aufgebracht und trocknen gelassen. Die Auftragsstärke beträgt auf Holzdielenunterlagen im Verbund 10 bis 20 mm und als selbstverlaufender, selbsttragender Dünnestrich auf Trennlage (PE-Folie) 20 bis 30 mm, z.B. auf Rohbeton. Andere geeignete Untergründe sind beispielsweise Verbund- und schwimmende Estriche. Das Trittschallverbesserungsmaß, ermittelt nach der erwähnten DIN EN 20140, auf einer 16 cm dicken Stahlbeton-Decke mit glatter Oberfläche ergab:

Trittschallverbesserungsmaß dLw = 12 dB
Verbesserungsmaß VM = 12 dB

Wird keine Verbesserung des Trittschalls gefordert, wird das Mörtelgemisch 5 bis 24 mm dick aufgetragen.

Nach 48 Stunden Austrocknungszeit beträgt die Restfeuchte (Resthaushaltsfeuchte) der erfinderischen Mischung max. 3 CM-% (Schnellbestimmung von Feuchtigkeit nach der Calciumcarbid-Methode), so daß jeder Bodenbelag mit den wasserarmen, emissionsarmen, lösungsmittelfreien (auch hochsiederfreien) Dispersions-Klebstoffen gemäß DE 196 20 176 A1 und Hartbelag (Parkett, Laminat, Keramik) mit elastischem Dünnbettmörtelkleber sicher verklebt werden kann.

Wird keine Verklebung des Teppichbodenbelages mit dem Untergrund beabsichtigt, so wird nach einer Ausführungsform des Verfahrens gemäß der Erfindung der Mörtel nach dem Austrocknen aufgerauht. Der Belag wird dann aufgelegt und lediglich leicht angerieben.

Bei einer anderen klebstofflosen Variante des Verfahrens gemäß der Erfindung wird mit einer Rolle, Spachtelglättkelle oder ähnlichem Auftragegerät auf die trockene Spachtelmasse eine wäßrige, nicht ionogene, stabilisierte, verseifungsbeständige Dispersion eines carboxylgruppenhaltigen Butadien/Styrol-Copolymerisates aufgetragen, wie sie aus DE 197 31 485 A1 bekannt ist und gemäß dem dort beschriebenen Verfahren als Elastifiziermittel eingesetzt wird. Diese Dispersion enthält 45 bis 75%, vorzugsweise 70% Copolymerisat, ist mit einem Dispergiermittel, wie 2-Amino-2-methyl-1-propanol, stabilisiert und weist äußerst geringe Emissionswerte von max. 300 µg/m$^3$ am 10. Tag auf.

Erfindungsgemäß enthält die Dispersion außerdem 10 bis 30 %, bezogen auf das Gewicht der Dispersion, an einem Gemisch aus a) latexierten vermahlenen Hartfasern, b) 0 bis 100 %, bezogen auf das Gewicht der Hartfasern, an Glasfasern und bzw. oder Polymerisatfasern, c) Aminosäurepolykondensationsfasern und d) Polyurethanschaum. Diese so gefüllte Dispersion wird auf den Spachtelmassenuntergrund in einer Schichtdicke von 0,5 mm bis 2 mm aufgebracht und trocknen gelassen.

Alternativ kann bei einer weiteren klebstofflosen Ausführungsform die Dispersion auch ohne einen Gehalt an Fasermaterial aufgetragen werden. Sie wird dann nach mindestens 24 Stunden Trocknen in noch fließfähigem Zustand mit dem Fasermaterial bestreut. Dessen Menge von 10 bis 30 % wird dann auf das Gewicht der auf die jeweilige zu behandelnde Fläche aufgetragenen Dispersion bezogen. Nach dem Einstreuen wird das Fasermaterial teilweise in die noch klebrige Dispersionsschicht einsinken und das Ganze trocknen gelassen. Nach dem Durchtrocknen werden bei der Ausführungsform des erfindungsgemäßen Verfahrens mit Einstreuen der Fasern die nicht in die Dispersion eingebundenen Fasern abgesaugt. Nach dem Einstreuen, Abtrocknen der Spachtelmasse wird eine emissionsarme Kunststoffdispersion mit carboxylhaltigem Butadien/Styrol-Copolymerisat aufgerollt oder mit einem geeigneten Gerät aufgesprüht. Der Anstrich dient der inneren Verfestigung des aufgetragenen Materials und gewährleistet DIN-gerechte Stuhlrolleneignung.

Nach einer weiteren Ausführungsform des Verfahrens gemäß der Erfindung wird der mit Wasser angemachte Trockenmörtel auf den verlegegeeigneten Untergrund aufgetragen und sofort nach Aufspachtelung unabhängig von der Auftrags- bez. Nivellierstärke in einer Menge von 600 bis 800 g/m$^2$ mit dem Fasergemisch bestreut. Dann wird nach dem Abtrocknen der Spachtelmasse der überschüssige Anteil an losen Fasern in Höhe von etwa 50% der eingestreuten Fasermenge durch Absaugen oder Abkehren entfernt und die emissionsarme Kunststoff-Dispersion eines carboxylgruppenhaltigen Butadien/Styrol-Copolymerisats auf die mit den Fasern "gespickte", getrocknete Spachtelmassenoberfläche aufgerollt oder mit einem geeigenten Gerät aufgesprüht. Der Anstrich dient der inneren Verfestigung des aufgetragenen Materials und gewährleistet eine DIN-gerechte Stuhlrolleneignung.

Anschließend wird der Belag aufgelegt und lediglich leicht angerieben. Bei den zuletzt aufgeführten Arten der Verlegung wird der Teppichboden ohne Verklebung in Form gehalten, so daß ein Verschieben über größere Verlegeflächen nicht mehr möglich ist. Zu diesem Zweck weist der Belag einen haftsicheren Rücken, beispielsweise einen haftsicheren Vliesrücken auf, der aus einem Nadelvlies aus textilen Fasern, wie Polyproylen, Polyester, Polyamid, Wolle, Baumwolle oder Gemischen daraus besteht und durch Kaschierung (Kleben) mit Latex oder Schmelzklebstoffen an der Belagrückseite befestigt ist.

Wenn es nicht auf Erzielung einer hohen Trittschalldämmung ankommt, kann statt der oben erläuterten Spachtelmasse auf verformungsfesten Untergründen (z.B. Beton, Estrichen) auch eine handelsübliche, zementäre, ettringitbildende, aber starr aushärtende Spachtelmasse eingesetzt werden, auf die, wie oben angegeben, die Dispersion aufgetragen und der Belag aufgebracht wird.

Diese neuen Arten der Teppichbodenverlegung, bei der eine regelrechte Verkrallung zwischen Belag und Mörteloberfläche erfolgt, stellen die erste rein mechanische Teppichfixierung dar.

Ein Auswechseln des Belages ist problemlos ohne Untergrundschädigung möglich. Der Einsatz dieser neuen Verlegemethode ist ideal für Mietwohnungen, Hotels und private Wohnbereiche.

Dieses Verlegeverfahren bietet gleichzeitig Klebstoff-Freiheit und damit maximale Umweltschonung, optimalen Arbeitsschutz für den Verleger, niedrigste Emissionswerte und eine hervorragende Belagsstabilität (keine Formveränderung durch Wasser oder andere Lösungsmittel aus Klebstoffen).

Grundlage der neuen Spachtelmasse ist die beispielsweise aus DE-OS 26 26 126 bekannte Ettringitbildung durch den Quellzement vom Typ K, nämlich Portlandzement, Tonerdeschmelzzement und Calciumsulfat. Hier werden die bekannten Additive, die mineralischen Füllstoffe, Sand und/oder Carbonate sowie redispergierbare Kunststoffpulver, wie Polyvinylacetat, Polyvinylalkohol und/oder deren Mischpolymerisate und/oder Acrylsäureester, zugesetzt.

Der erfindungsgemäß einzusetzende Verflüssiger 2,3,4,5-Tetrahydroxyadipinsäure, der zugleich als Abbindeverzögerer wirkt, kann bis zu 50% durch andere Verflüssiger auf Basis von Hydroxycarbonsäuren und/oder deren Alkalisalzen, wie Citronensäure, Citrate, Weinsäure, Tartrate, Gluconsäure, Gluconate, Äpfelsäure und/oder Milchsäure, ersetzt sein. In diesen Spachtelmassenmörtel werden, soweit oben aufgeführt, Recyclingfüllstoff-Fasermischungen eingebaut.

Durch die extrem hohe Verflüssigung des Mörtels haften die Spachtelmassenteilchen an den Fasern und den anderen zermahlenen Füllstoffpartikeln durch van der Waals'sche Kräfte, elektrostatische Kräfte und Flüssigkeitsbrükken. Durch die Latexierung der Fasermaterialien nach dem Vermahlen und gegebenenfalls vor dem Verpressen der schalldämmenden Materialmischung wird der Glättungsprozeß des erfinderischen Mörtels überraschenderweise nicht gestört.

Zur Erhöhung der Hydrophobie der Massen nach der Erfindung erfolgt ferner der Zusatz von 2,5-Furandicarbonsäure. Freie Calciumionen aus der Quellzement-K-Grundlage werden auf diese Weise an die Carboxylgruppen gebunden, so daß eine weitere Erhöhung der Verflüssigung und/oder eine erhöhte Hydrophobie erreicht und eine Anlösung und ein Ablösen der Spachtelmassenoberfläche im Mikrobereich durch Wassereinwirkung aus höher wasserbasierten, lösungsmittelfreien Dispersions-Klebstoffen sicher verhindert werden.

Vorteile der Erfindung sind:

(1) Verwendung eines an sich bekannten mineralischen Quellzements vom Typ K unter Zusatz verflüssigend wirkender Additive auf der Basis 2,3,4,5-Tetrahydroxyadipinsäure und

(2) eines Hydrophobierzusatzes von 2,5-Furandicarbonsäure

(3) Einbau eines Gemisches aus latexierten, vermahlenen Hartfasern, die mit Glasfasern und bzw. oder Polymerisatfasern vermischt sein können, Aminosäurepolykondensationsfasern und Polyurethan-Schaum. Dadurch Ermöglichung rein mechanischer Teppichbodenfixierung; damit Erhöhung der Umweltfreundlichkeit wegen Wegfalls der Verklebung; trotzdem stabile Fixierung des Belags bei leichter Entfernbarkeit;

(4) Selbsttragender, selbstverlaufender Dünnestrich mit mind. 10 mm bis max. 30 mm Auftragsstärke auf PE-Trennfolie;

(5) Schnelle Austrocknung der Spachtelmasse mit max. 3 CM% Restfeuchte nach 48 Stunden mit sofortiger Verlegbarkeit aller bekannten elastischen Bodenbeläge (PVC, Gummi, Polyolefin, Linoleum, Teppich) und Hartbodenbeläge (Parkett, Laminat, Keramik) mit neuen wasserarmen Dispersions-Klebstoffen mit niedrigstem Emissionsniveau von max. 300 $\mu g/m^3$ (Messung am 10. Tag);

(6) Trittschallverbesserung nach DIN 4109 und DIN EN 20140 bei einer ausgehärteten 25-mm-Mörtelschichtdicke der Erfindung mit dLw = 12 dB und VM = 12 dB;

(7) Verbesserung der Wärmedämmung gegenüber herkömmlichen Zementestrichen;

(8) Freiheit von Geruchsbelästigungen und Emissionen. Dadurch ist das Verfahren nach der Erfindung optimal umwelt-, verarbeitungs- und nutzungsfreundlich;

(9) Der Dünnschicht-Schnell-Mörtelausgleich nach dem Verfahren gemäß der Erfindung haftet in einer Schichtdicke von 5 mm bis 30 mm sowohl auf Altbelägen, ohne daß diese herausgerissen werden müssen, durch Auslegen einer PE-Folie von beispielsweise 0,1 bis 0,2 mm Dicke als auch auf Holzdielung oder starren zementären Untergründen. Die Produktion des Trockenmörtels und der wäßrigen Kunststoffdispersion ohne Fasern ist einfacher.

Die folgenden Beispiele erläutern die Erfindung:

Beispiel 1

| 79 Gew.-% | Spachtelmasse auf der Basis des bekannten Quellzements vom Typ K ohne Verflüssiger und Verzögerer |
|---|---|
| 0,5 Gew.-% | 2,3,4,5-Tetrahydroxyadipinsäure |
| 0,5 Gew.-% | 2,5-Furandicarbonsäure |
| 20 Gew.-% | latexierte vermahlene Hartfasern, Aminosäure-Polykondensationsfasern, PU-Schaum (1:1:1) |
| 100 Gew.-% | |

100 kg des Dünnschichtestrichmörtels der Erfindung werden mit 8 kg einer 50-prozentigen nicht ionogenen, stabilisierten, verseifungsbeständigen Dispersion eines carboxylgruppenhaltigen Butadien/Styrol-Copolymerisates versetzt und mit 22 Liter Leitungswasser zu einem selbstnivellierenden Dünnestrichmörtel angerührt und zwischen 10 bis max. 30 mm auf die o.g. Untergründe aufgetragen.

Obiges Beispiel, berechnet für:
Alle Bestandteile ohne Anmachwasser = 100%

| 92,6 Gew.-% | erfindungsgemäßer Trockenmörtel incl. Fasern und Additive |
|---|---|
| 7,4 Gew.-% | einer 50-prozentigen Dispersion eines carboxylgruppenhaltigen Butadien/Styrol-Copolymerisates |
| 100 Gew.-% | |

100 kg des mit genannter Dispersion elastifizierten Mörtels werden mit 20,4 Liter Leitungswasser zu dem selbstnivellierenden Mörtel angerührt und in den genannten Schichtdicken auf die genannten Untergründe aufgetragen. Nach dem Aufspachteln mit der Glättkelle wird durch den noch frischen Mörtel eine Stachelwalze durchgezogen. Nach 12 Stunden Austrocknung wird die Mörteloberfläche mit einer rotierenden Stahlbürste mechanisch aufgerauht und der Staub abgesaugt. Durch diese Behandlung wird die Füllstoff-Fasermischung von der Zementmörtelummantelung befreit, wodurch die Fasern gleichzeitig vertikal aufgerichtet und die eingearbeitete Faserstruktur erhöht werden. Schon während des Trocknungsvorganges richten sich die Spezialfasern auf. Das Aufrauhen (Anschleifen) erhöht diesen Effekt. Auf den so vorbereiteten Untergrund wird einmal ein Teppichboden aufgelegt und leicht angerieben. Er bleibt verschiebefest liegen. Zum anderen erfolgt das Auslegen von mit einem Vliesrücken versehenen Parkett. Auch dieses bleibt verschiebefest liegen.

Beispiel 2

Das Verfahren gemäß Beispiel 1 wird mit der Abweichung wiederholt, daß 40 Gew.-% der latexierten, vermahlenen Hartfasern durch ein 1:1-Gemisch (Gewicht) aus Glasfasern und Polyacrylnitrilfasern ersetzt wurden. Nach Verlegen des Teppichbodens bleibt dieser ebenfalls verschiebefest liegen.

Beispiel 3

| 79 Gew.-% | Spachtelmasse auf der Basis des bekannten Quellzements vom Typ K ohne Verflüssiger und Verzögerer |
|---|---|
| 0,5 Gew.-% | 2,3,4,5-Tetrahydroxyadipinsäure |
| 0,5 Gew.-% | 2,5-Furandicarbonsäure |
| 20 Gew.-% | latexierte vermahlene Hartfasern, zu 30% ersetzt durch ein 1:1-Gemisch (Gewicht) aus Glasfasern und Polypropylenfasern (33,3%), Aminosäure-Polykondensationsfasern (33,3%), PU-Schaum (33,3%) |
| 100 Gew.-% | |

100 kg des Dünnschichtestrichmörtels der Erfindung werden mit 8 kg einer 50-prozentigen nicht ionogenen, stabilisierten, verseifungsbeständigen Dispersion eines carboxylgruppenhaltigen Butadien/Styrol-Copolymerisates versetzt und mit 22 Liter Leitungswasser zu einem selbstnivellierenden Dünnestrichmörtel angerührt und zwischen 10 bis max. 30 mm auf die o.g. Untergründe aufgetragen.

Obiges Beispiel, berechnet für:
Alle Bestandteile ohne Anmachwasser = 100%

| | |
|---|---|
| 92,6 Gew.-% | erfindungsgemäßer Trockenmörtel incl. Fasern und Additive |
| 7,4 Gew.-% | einer 50-prozentigen Dispersion eines carboxylgruppenhaltigen Butadien/Styrol-Copolymerisates |
| 100 Gew.-% | |

100 kg des mit genannter Dispersion elastifizierten Mörtels werden mit 20,4 Liter Leitungswasser zu dem selbstnivellierenden Mörtel angerührt und in den genannten Schichtdicken auf die genannten Untergründe aufgetragen.

Nach 48 Stunden können elastische Beläge mit absolut lösungsmittelfreien, emissionsarmen (unter 300 μg/m$^3$) und umweltgerechten, wasserarmen Dispersions-Klebstoffen gemäß DE 196 20 176 A1 verklebt werden. Im Anschluß an den Auftrag des Klebstoffs wird der Belag aufgebracht.

Beispiel 4

| | |
|---|---|
| 98,0 Gew.-% | Spachtelmasse auf der Basis des bekannten Quellzements vom Ty K, bestehend aus Portlandzement, Tonerdeschmelzzement und Calciumsulfat, ohne Verflüssiger und Verzögerer herkömmlicher Art |
| 1,0 Gew.-% | 2,3,4,5-Tetrahydroxyadipinsäure |
| 1,0 Gew.-% | 2,5-Furandicarbonsäure |
| 100,0 Gew.-% | |

100 kg dieser Spachtelmasse werden mit 25 Liter Leitungswasser zu einem selbstnivellierenden Mörtel angerührt und mit einer Auftragsstärke von 5 bis max. 10 mm als Spachtelausgleich auf Untergründe aufgetragen und trocknen gelassen.

Getrennt davon wird eine faserhaltige Dispersion hergestellt aus:

| | |
|---|---|
| 70,0 Gew.-% | einer 70-prozentigen nicht ionogenen, stabilisierten, emissionsarmen, verseifungsbeständigen, wäßrigen Dispersion eines carboxylgruppenhaltigen Butadien/Styrol-Copolymerisats und |
| 30 Gew.-% | latexierten vermahlenen Hartfasern, Aminosäure-Polykondensationsfasern, PU-Schaum (1:1:1) |
| 100 Gew.-% | |

Die Dispersion wird in einer Schichtdicke von 0,5 bis 2,0 mm auf die haushaltsfeuchte (max. 3CM-%), abgetrocknete Spachtelmasse mit der Glättkelle oder Lammfellrolle aufgetragen. Nach Verdunsten des Dispergierwassers der Dispersion (ca. 24 Stunden) erfolgt einmal das Auflegen eines Teppichbodens mit aufgebrachtem haftsicheren Vliesrücken. Der Teppichboden wird leicht angerieben. Er bleibt verschiebefest liegen. Zum anderen erfolgt das Auslegen von mit einem Vliesrücken versehenen Parkett. Auch dieses bleibt verschiebefest liegen.

Beispiel 5

Das Verfahren gemäß Beispiel 4 wird mit der Abweichung wiederholt, daß 40 Gew.-% der latexierten, vermahlenen Hartfasern durch ein 1:1-Gemisch (Gewicht) aus Glasfasern und Polyacrylnitrilfasern ersetzt wurden. Nach Verlegen des Teppichbodens bleibt dieser ebenfalls verschiebefest liegen.

Beispiel 6

Beispiel 4 wird mit der Abweichung wiederholt, daß auf die getrocknete Spachtelmasse die in Beispiel 4 angegebene wäßrige Dispersion eines Copolymerisats aus Butadien und Styrol, jedoch ohne Fasergehalt aufgebracht wird. Nach 24-stündigem Trocknenlassen wird das in Beispiel 4 bei der Herstellung der faserhaltigen Dispersion angegebene Fasergemisch in die noch klebrige Dispersion eingestreut. Nach gründlichem Durchtrocknen des Gesamtauftrages werden noch lose Fasern abgesaugt. Nach dem Einstreuen, Abtrocknen der Spachtelmasse wird eine emissionsarme Kunststoffdispersion mit carboxylhaltigem Butadien/Styrol-Copolymerisat aufgerollt oder mit einem geeigneten Gerät aufgesprüht. Der Anstrich dient der inneren Verfestigung des aufgetragenen Materials und gewährleistet DIN-gerechte Stuhlrolleneignung. Der Teppichboden wird, wie in Beispiel 4 angegeben, aufgelegt und leicht angerieben. Er bleibt verschiebefest liegen.

Beispiel 7

In die gemäß Beispiel 4 aufgetragene Spachtelmasse wird noch vor dem Abtrocknen das in Beispiel 4 bei der Herstellung der faserhaltigen Dispersion angegebene Fasergemisch in einer Menge von 600 bis 800 g/m$^2$ eingestreut. Nach dem Abtrocknen der Spachtelmasse wird der Überschuß an losen Fasern in Höhe von 300 bis 400 g/m$^2$ abgesaugt und die in Beispiel 4 angegebene wäßrige Dispersion eines carboxylhaltigen Butadien/Styrol-Copolymerisats in einer Menge von 250 bis 350 g/m$^2$ aufgesprüht bzw. mit einer Lammfellrolle aufgetragen. Nach dem Durchtrocknen des Auftrages erfolgt das Auslegen und Anreiben des Bodenbelages. Es ergibt sich eine belagsformstabile, verschiebefeste Fixierung des Belags.

## Patentansprüche

1. Verfahren zum Verlegen von Belägen auf Untergründe, bei dem man für die Untergründe eine an sich bekannte Spachtelmasse in Form einer Trockenmörtelmischung auf der Basis von Portlandzement, Tonerdeschmelzzement und Calciumsulfat (Quellzement vom Typ K), die zur Bildung einer Ettringitphase geeignet ist, mit 0,15 bis 1,0 Gewichtsprozent 2,3,4,5-Tetrahydroxyadipinsäure als Verflüssiger und 10 bis 20 Gewichtsprozent, jeweils bezogen auf die Gesamttrockenmörtelmischung, eines Gemisches aus a) latexierten vermahlenen Hartfasern, b) Glasfasern und bzw. oder Polymerisatfasern, c) Aminosäurepolykondensationsfasern und d) Polyurethanschaum vermischt und den so erhaltenen Trockenmörtel mit einer verseifungsbeständigen Dispersion eines carboxylgruppenhaltigen Butadien/Styrol-Copolymerisats mit äußerst geringen Emissionswerten vom max. 300 µg/m$^3$ am 10. Tag in einer Menge von 4 bis 8 Gewichtsprozent, bezogen auf die Gesamttrockenmörtelmischung, elastifiziert, das erhaltene Gemisch mit Wasser anmacht, auf den Untergrund aufbringt und trocknen läßt und anschließend auf den so erhaltenen Schnell-Dünnschichtestrich mit verbessertem Trittschallschutzmaß (TSM) eine emissionsarme (max. 300 µg/m$^3$), lösungsmittelfreie Kunstharzdispersion mit einem Wassergehalt von nicht mehr als 15 Prozent, mit einem Gehalt an einem Klebrigmacher auf Basis natürlicher Harzester und bzw. oder von Kunstharzen und mit einem Gehalt an einem Emulgator auf Basis von sulfatierten und/oder sulfonierten Hydroxy-octadecensäuren und/oder deren hochmolekularen Triglyceriden von 1 bis 5 Gewichtsprozent, bezogen auf die Kunstharzdispersion, wobei der Klebrigmacher auf einen pH-Wert von 4 bis 6 eingestellt ist, aufbringt und danach den Belag darauf verlegt.

2. Abwandlung des Verfahrens zum Verlegen von Belägen auf Untergründe nach Anspruch 1, bei dem man für die Untergründe eine an sich bekannte Spachtelmasse in Form einer Trockenmörtelmischung auf der Basis von Portlandzement, Tonerdeschmelzzement und Calciumsulfat (Quellzement vom Typ K), die zur Bildung einer Ettringitphase geeignet ist, mit 0,15 bis 1,0 Gewichtsprozent, bezogen auf die Gesamttrockenmörtelmischung, 2,3,4,5-Tetrahydroxyadipinsäure als Verflüssiger vermischt, anmacht und auf den Untergrund aufbringt und eine mechanische, klebstofffreie Verbindung zwischen Belag und Untergrund durch Anordnen eines aus dem Untergrund herausragenden Gemisches aus a) latexierten vermahlenen Hartfasern, b) 0 bis 100%, bezogen auf das Gewicht der Hartfasern, an Glasfasern und bzw. oder Polymerisatfasern, c) Aminosäurepolykondensationsfasern und d) Polyurethanschaum herbeiführt.

3. Verfahren nach Anspruch 2, dadurch **gekennzeichnet**, daß man die Verbindung zwischen Belag und Untergrund dadurch herbeiführt, daß man die mit dem Verflüssiger versetzte Trockenmörtelmischung mit 10 bis 20 Gewichtsprozent, bezogen auf die Gesamttrockenmörtelmischung, des Fasergemisches vermischt und den so erhaltenen Trockenmörtel mit einer verseifungsbeständigen Dispersion eines carboxylgruppenhaltigen Butadien/Styrol-Copolymerisats mit äußerst geringen Emissionswerten (max. 300 µg/m$^3$) in einer Menge von 4 bis 8 Gewichtsprozent, bezogen auf die Gesamttrockenmörtelmischung, elastifiziert, das erhaltene Gemisch mit Wasser anmacht, auf den Untergrund aufbringt und trocknen läßt und anschließend den so erhaltenen Schnell-Dünnschichtestrich aufrauht, die aufgerauhte Oberfläche von Staub befreit und danach den Belag darauf verlegt und leicht anreibt.

4. Verfahren nach Anspruch 2, dadurch **gekennzeichnet**, daß man die Verbindung zwischen Belag und Untergrund dadurch herbeiführt, daß man die mit dem Verflüssiger versetzte Trockenmörtelmischung mit Wasser anmacht, auf den Untergrund aufbringt und trocknen läßt und anschließend auf den so erhaltenen Schnell-Dünnschichtestrich mit verbessertem Trittschallschutzmaß (TSM) eine wäßrige, nicht ionogene, stabilisierte, emissionsarme, verseifungsbeständige Dispersion eines carboxylgruppenhaltigen Butadien/Styrol-Copolymerisats mit einem Gehalt an dem Fasergemisch von 10 bis 30 Gew.-%, bezogen auf die faserfreie Dispersion, in einer Schichtdicke von 0,5 bis 2 mm aufbringt und trocknen läßt und auf die getrocknete Oberfläche den einen haftsicheren Vliesrücken aufweisenden Belag verlegt und leicht anreibt.

5. Verfahren Anspruch 2, dadurch **gekennzeichnet**, daß man die Verbindung zwischen Belag und Untergrund dadruch herbeiführt, daß man die mit dem Verflüssiger versetzte Trockenmörtelmischung mit Wasser anmacht, auf den Untergrund aufbringt und trocknen läßt und anschließend auf den so erhaltenen Schnell-Dünnschichtestrich mit verbessertem Trittschallschutzmaß (TSM) eine wäßrige, nicht ionogene, stabilisierte, emissionsarme verseifungsbeständige Dispersion eines carboxylgruppenhaltigen Butadien/Styrol-Copolymerisats in einer Schichtdicke vom 0,5 bis 2 mm aufbringt und mindestens 24 Stunden trocknen läßt, in die noch fließfähige Dispersion das Fasergemisch in einer Menge von 10 bis 30%, bezogen auf das Gewicht der für die jeweilige Fläche verwendeten faserfreien Dispersion, einstreut, die Dispersion trocknen läßt und die getrocknete Oberfläche von losen Fasern befreit und danach den einen haftsicheren Vliesrücken aufweisenden Belag darauf verlegt und leicht anreibt.

6. Verfahren nach Anspruch 2, dadurch **gekennzeichnet**, daß man die Verbindung zwischen Belag und Untergrund dadurch herbeiführt, daß man die mit dem Verflüssiger versetzte Trockenmörtelmischung mit Wasser anmacht, auf den Untergrund aufbringt, noch vor dem Austrocknen nach dem Aufspachteln das Fasergemisch einstreut und nach dem Abtrocknen der Spachtelmasse und Entfernen des überschüssigen Faseranteils eine wäßrige, nicht ionogene, stabilisierte, emissionsarme, verseifungsbeständige Dispersion eines carboxylgruppenhaltigen Butadien/Styrol-Copolymerisats in einer Schichtdicke von 0,5 bis 2 mm aufbringt und danach den einen haftsicheren Vliesrücken aufweisenden Belag darauf verlegt und leicht anreibt.

7. Verfahren nach einem der Ansprüche 3 bis 6, dadurch **ge-kennzeichnet**, daß man die nicht ionogene, stabilisierte, emissionsarme, verseifungsbeständige Dispersion eines carboxylgruppenhaltigen Butadien/Styrol-Copolymerisats auf eine übliche zementäre, ettringitbildende, starr aushärtende Spachtelmasse, aufbringt.

8. Verfahren nach einem der vorhergehenden Ansprüche, dadurch **gekennzeichnet**, daß man als Verflüssiger eine 2,3,4,5-Tetrahydroxyadipinsäure verwendet, die bis zu 50 Gewichtsprozent durch Citronensäure, Weinsäure, Gluconsäure, Äpfelsäure und/oder Milchsäure und/oder deren Alkalisalze ersetzt ist.

9. Verfahren nach einem der vorhergehenden Ansprüche, dadurch **gekennzeichnet**, daß man in die Spachtelmasse 0,1 bis 1,0 Gewichtsprozent einer 2,5-Furandicarbonsäure einarbeitet.

10. Verfahren nach einem der vorhergehenden Ansprüche, dadurch **gekennzeichnet**, daß man als Hartfasern Kokos-, Sisal- oder Hanf fasern verwendet.

11. Verfahren nach einem der vorhergehenden Ansprüche, dadurch **gekennzeichnet**, daß man Hartfasern einsetzt, die nach dem Vermahlen und Latexieren verpreßt worden sind.

12. Verfahren nach einem der vorhergehenden Ansprüche, dadurch **gekennzeichnet**, daß man latexierte Hartfasern einsetzt, in denen der Latex ganz oder teilweise durch ein carboxylgruppenhaltiges Butadien/Styrol-Copolymerisat und/oder durch ein Acrylsäuremischester-Polymerisat ersetzt ist.

13. Verfahren nach einem der vorhergehenden Ansprüche, dadurch **gekennzeichnet**, daß man als Polymerisatfasern Polyacrylnitril-, Polyamid-, Polyester- oder Polypropylenfasern verwendet.

14. Verfahren nach einem der vorhergehenden Ansprüche, dadurch **gekennzeichnet**, daß man in die nicht ionogene, stabilisierte, emissionsarme, verseifungsbeständige Dispersion eines carboxylgruppenhaltigen Butadien/Styrol-Copolymerisats als Stabilisierungsmittel 2-Amino-2-methyl-1-propanol in einer Menge von 0,15 bis 1,0 Gewichtsprozent einbringt.

15. Spachtelmassen-Trockenmörtelmischung auf der Basis von Portlandzement, Tonerdeschmelzzement und Calciumsulfat (Quellzement der Type K), die zur Bildung einer Ettringitphase geeignet ist, mit einem Gehalt an 2,3,4,5-Tetrahydroxyadipinsäure als Verflüssiger in einer Menge von 0,15 bis 1,0 Gewichtsprozent, bezogen auf die Gesamtmenge.

16. Spachtelmassen-Trockenmörtelmischung auf der Basis von Portlandzement, Tonerdeschmelzzement und Calciumsulfat (Quellzement vom Typ K), die zur Bildung einer Ettringitphase geeignet ist, mit 2,3,4,5-Tetrahydroxyadipinsäure als verflüssiger in einer Menge von 0,15 bis 1,0 Gewichtsprozent und einem Gemisch, bestehend aus a) latexierten vermahlenen Hartfasern, b) Glasfasern und bzw. oder Polymerisatfasern, c) Aminosäurepolykondensationsfasern sowie d) Polyurethanschaum, in einer Menge von 10 bis 20 Gewichtsprozent, jeweils bezogen auf die Gesamtmörtelmischung.

17. Wäßrige, nicht ionogene, stabilisierte, emissionsarme, verseifungsbeständige Dispersion eines carboxylgruppenhaltigen Butadien/Styrol-Copolymerisats, enthaltend 10 bis 30 %, bezogen auf die faserfreie Dispersion, eines Gemisches, bestehend aus a) latexierten vermahlenen Hartfasern, b) 0 bis 100 %, bezogen auf das Gewicht der Hartfasern, an Glasfasern und bzw. oder Polymerisatfasern, c) Aminosäurepolykondensationsfasern sowie d) Polyurethanschaum.